(19) **Europäisches Patentamt**

**European Patent Office**

**Office européen des brevets**

(11) **EP 1 302 014 B1**

(12) **EUROPÄISCHE PATENTSCHRIFT**

(45) Veröffentlichungstag und Bekanntmachung des Hinweises auf die Patenterteilung:
**31.08.2005 Patentblatt 2005/35**

(21) Anmeldenummer: **01953847.9**

(22) Anmeldetag: **29.06.2001**

(51) Int Cl.$^7$: **H04L 1/06**

(86) Internationale Anmeldenummer:
**PCT/DE2001/002465**

(87) Internationale Veröffentlichungsnummer:
**WO 2002/007373 (24.01.2002 Gazette 2002/04)**

(54) **VERFAHREN UND EINRICHTUNG ZUR DIVERSITÄTSÜBERTRAGUNG CODIERTER INFORMATION**

METHOD AND DEVICE FOR DIVERSITY TRANSMISSION OF ENCODED INFORMATION

PROCEDE ET DISPOSITIF D'EMISSION EN DIVERSITE D'INFORMATIONS CODEES

(84) Benannte Vertragsstaaten:
**DE FR GB**

(30) Priorität: **17.07.2000 DE 10034714**

(43) Veröffentlichungstag der Anmeldung:
**16.04.2003 Patentblatt 2003/16**

(73) Patentinhaber: **Infineon Technologies AG**
**81669 München (DE)**

(72) Erfinder:
- **DOETSCH, Markus**
  **CH-3098 Schliern (CH)**
- **JUNG, Peter**
  **67697 Otterberg (DE)**
- **KELLA, Tideya**
  **80337 München (DE)**
- **PLECHINGER, Jörg**
  **80469 München (DE)**
- **SCHMIDT, Peter**
  **67158 Ellerstadt (DE)**
- **SCHNEIDER, Michael**
  **81541 München (DE)**

(74) Vertreter: **Lange, Thomas et al**
**Patentanwälte**
**Lambsdorff & Lange**
**Dingolfinger Strasse 6**
**81673 München (DE)**

(56) Entgegenhaltungen:
WO-A-00/36783          WO-A-01/54303
WO-A-97/45976          US-A- 5 978 365

- VAN WYK ET AL: "Fading correlation and its effect on the capacity of space-time turbo coded DS/CDMA systems" MILCOM 1999. IEEE MILITARY COMMUNICATIONS CONFERENCE PROCEEDINGS. ATLANTIC CITY, NJ, OCT. 31 - NOV. 3, 1999, IEEE MILITARY COMMUNICATIONS CONFERENCE, NEW YORK, NY: IEEE, US, Bd. VOL 1 OF 2 CONF. 18, 31. Oktober 1999 (1999-10-31), Seiten 538-542, XP002151967 ISBN: 0-7803-5539-3

**Beschreibung**

Die Erfindung betrifft ein Verfahren und eine Einrichtung zur Erzeugung eines Übertragungssignals, das mehrere für die Abstrahlung über jeweils eine Sendeantenne vorgesehene Antennendatensignale umfaßt.

In Mobilfunksystemen wird die Übertragungsqualität durch Zeitvarianz und Frequenzselektivität des Mobilfunkkanals sowie durch zeitlich veränderliche Vielfachzugriffsinterferenz beeinflußt. Digitale Mobilfunksysteme nutzen in der Regel mehrere Arten von Diversität aus, um das Systemverhalten zu verbessern. Bekannte Maßnahmen zur Ausnutzung der Frequenzdiversität des Mobilfunkkanals sind die Verwendung einer CDMA- oder TDMA-Komponente beim Vielfachzugriff. Die Zeitdiversität des Kanals wird üblicherweise durch eine Kanalcodierung und Verschachtelung des zu übertragenden Datensignals ausgenutzt. Ein weiterer Diversitätstyp ist die Raumdiversität. Bei der Raumdiversität wird zwischen der Antennendiversität ("antenna diversity"), der Richtungsdiversität ("directional diversity") und der Polarisationsdiversität ("polarisation diversity") unterschieden.

Im folgenden wird die Antennendiversität betrachtet. Antennendiversität ist nutzbar, weil der Zustand des Mobilfunkkanals für verschiedene Standorte der Mobil- und Basisstationen unterschiedlich ist. Man unterscheidet bei Antennendiversität zwischen dem Fall der Verwendung mehrerer Empfangsantennen ("empfängerseitige Antennendiversität") und dem Fall der Verwendung mehrerer Sendeantennen ("senderseitige Antennendiversität"), wobei beide Möglichkeiten auch in Kombination auftreten können. Während empfängerseitige Antennendiversität aus theoretischer Sicht gut verstanden ist und in der Praxis vielfach genutzt wird, ist das Konzept der senderseitigen Antennendiversität bisher weniger gut erforscht.

Es sind bereits spezielle für senderseitige Antennendiversität konzipierte Turbo-Codes vorgeschlagen worden. Dabei erfolgt die Erzeugung der mehreren Sendedatenströme für die Sendeantennen bereits bei der Codierung. Diese Vorgehensweise kann als Antennendiversitätscodierung ("antenna diversity coding") bezeichnet werden.

Nachteilig bei diesem Konzept ist, daß die Anzahl der benötigten Sendeantennen von der Coderate $R_C$ = k/n abhängt. Die Coderate $R_C$ ist der Quotient aus der Anzahl k von Eingabe-Datensymbolen und der Anzahl, n von Ausgabe-Datensymbolen (bezogen auf die k Eingabe-Datensymbole) des Codierers. Bei einer Coderate von z.B. $R_C$ = 1/2 müssen zwei Sendeantennen eingesetzt werden, während eine Coderate $R_C$ = 1/3 eine Anzahl von drei Sendeantennen erfordert. Ist, wie im UMTS-(Universal Mobile Telecomunnications System)-Standard, eine variable, dienstabhängige Coderate möglich und vorgesehen, ist das Verfahren der Antennendiversitätscodierung nicht praktikabel, weil jeder Dienst (z.B. Sprache, Video) eine unterschiedliche Sendeantennenanzahl benötigt.

In dem Artikel "Fading Correlation and its Effect on the Capacity of Space-Time Turbo Coded DS/CDMA Systems", von D.J. Wyk et al., Milcom 1999, IEEE Military Communications Conference Proceedings, Atlantic City, NJ, October 31 - November 3, 1999, IEEE Military Communications Conference, New York, NY: IEEE, US, Vol. 1 of 2 CONF. 18, 31. Oktober 1999, Seiten 538 bis 542, sind ein Verfahren und eine Einrichtung zur Antennendiversitäts-Codierung für M Sendeantennen beschrieben. Ein Turbo-Codierer nimmt eine Codierung mit einer Coderate von 1/(M+1) vor und erzeugt M+1 Datenströme. Diese werden mittels eines Punktierers-und-Multiplexers in M Datenströme transformiert, welche anschließend über die M Sendeantennen abgestrahlt werden.

In der Schrift WO 00/36783 ist ein Sendesystem mit einer Anzahl von zwei Sendeantennen beschrieben. Sofern der Kanalcodierer eine Coderate kleiner 1/2 aufweist, wird mittels einer Punktiereinheit eine Datenratenanpassung vorgenommen.

Der Erfindung liegt die Aufgabe zugrunde, ein Verfahren anzugeben, das die Realisierung von Mobilfunksendern, die senderseitige Antennendiversität ausnutzen, erleichtert und das insbesondere den Anforderungen zur Übertragung unterschiedlicher Dienste gerecht wird. Ferner zielt die Erfindung darauf ab, eine diese Eigenschaften aufweisende Sendeeinrichtung für senderseitige Antennendiversitätsübertragung zu schaffen.

Die der Erfindung zugrundeliegende Aufgabenstellung wird durch die Merkmale der unabhängigen Ansprüche gelöst.

Durch die im Signalweg zwischen der Kanalcodierung und den Sendeantennen eingesetzte Datenratenanpassung wird eine Entkopplung der Größen N (Anzahl der Sendeantennen) und $R_C$ (Coderate des Kanalcodierers) erreicht. Dies ermöglicht, die Datensymbole des codierten Nutzdatensignals unabhängig von der verwendeten Coderate $R_C$ auf eine beliebige, aber feste Anzahl N von Sendeantennen zu verteilen. Aus herstellungstechnischer Sicht ergibt sich selbst bei einer festen Coderate $R_C$ bereits der Vorteil, daß die Anzahl N der Sendeantennen nicht durch eine Software-bestimmte Größe (der Coderate $R_C$) zwingend vorgeschrieben wird, welche bei der Fertigung des Senders (z.B. eines Mobiltelefons) in vielen Fällen noch unbekannt ist. Unter dem Gesichtspunkt, daß moderne Mobilfunksysteme zur Übertragung einer Vielzahl von Diensten mit unterschiedlichen Anforderungen an die Kanalcodierung geeignet sein müssen, ergibt sich der Vorteil, daß die Anzahl der Sendeantennen auch bei variabler Coderate $R_C$ konstant sein kann.

Für die Datenratenanpassung kann in bevorzugter Weise eine Punktierung und/oder eine Wiederholung ("repetitive coding") von Datensymbolen des codierten Nutzdatensignals vorgesehen sein.

Eine weitere vorteilhafte Ausgestaltung der Erfindung kennzeichnet sich dadurch, daß im Signalweg zwischen der Kanalcodierung und der Abstrahlung der Antennendatensignale über die Sendeantennen eine Demultiplexierung und/oder eine Verschachtelung des codierten Nutzdatensignals erfolgt. Durch diese Maßnahmen können, sofern erforderlich, die Verteilung des codierten Nutzdatensignals auf die N abzustrahlenden Sendedatenströme in geeigneter Weise gesteuert und die Übertragungseigenschaften des Übertragungssignals verbessert werden.

Eine besonders leistungsfähige Form der Codierung, die auch mit variabler Coderate erfolgen kann, wird durch eine Turbo-Codierung realisiert. In diesem Fall kennzeichnet sich eine zweckmäßige Ausführungsvariante der Erfindung dadurch, daß bei der Turbo-Codierung ein systematisches Datensignal, ein Redundanzdatensignal und ein verschachteltes Redundanzdatensignal erzeugt werden, daß aus diesen drei Datensignalen durch Verteilung der Datensymbole untereinander drei Mischdatensignale mit unveränderter Datenrate erzeugt werden, und daß, sofern N < 3, durch eine Punktierung aller drei Mischdatensignale und anschließende Multiplexierung oder, sofern N > 3, durch eine Wiederholung von Datensymbolen der drei Mischdatensignale und anschließende Demultiplexierung, die vorgegebene Anzahl von N Antennendatensignalen erzeugt wird.

Weitere vorteilhafte Ausgestaltungen der Erfindung sind in den Unteransprüchen angegeben.

Die Erfindung wird nachfolgend anhand von Ausführungsbeispielen unter Bezugnahme auf die Zeichnung erläutert; in dieser zeigt:

Fig. 1 ein vereinfachtes Blockschaltbild einer Einrichtung zur Erzeugung von N Antennendatensignalen nach dem Stand der Technik;

Fig. 2 ein vereinfachtes Blockschaltbild zur Erläuterung der erfindungsgemäßen Erzeugung einer vorgebbaren Anzahl von N Antennendatensignalen;

Fig. 3 ein Schaltbild zur Erläuterung des Aufbaus eines Turbo-Codierers; und

Fig. 4 eine schematische Darstellung in Form eines kombinierten Blockschaltbild- und Datensignaldiagramms zur Erläuterung von zwei Varianten der erfindungsgemäßen Einrichtung.

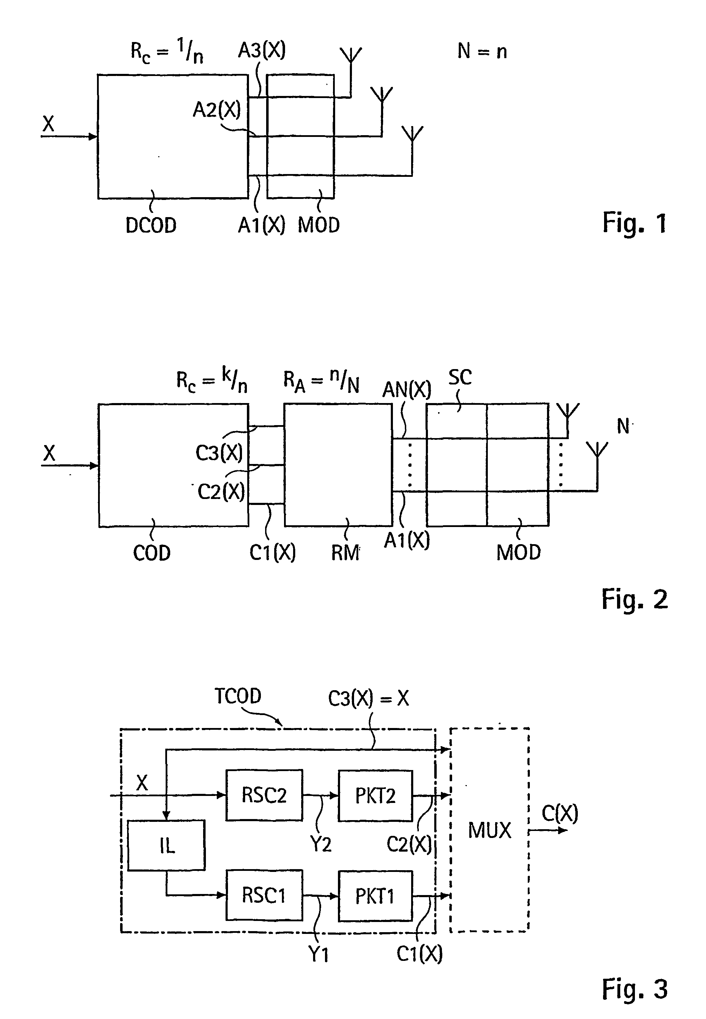

In Fig. 1 ist eine kürzlich vorgeschlagene Einrichtung zur Erzeugung eines senderseitige Antennendiversität ausnutzenden Übertragungsdatensignals dargestellt. Ein Nutzdatensignal X wird einem Diversitäts-Kanalcodierer DCOD zugeführt. Das Nutzdatensignal X besteht aus einer Folge von Datensymbolen, X = $(x_1, x_2, ..)$, beispielsweise Bits. Der Diversitäts-Kanalcodierer DCOD führt eine Kanalcodierung mit der Coderate $R_C$ = 1/n durch. Dies bedeutet, daß jedem Datensymbol des Nutzdatensignals X n-1 Redundanzdatensymbole hinzugefügt werden. Im dargestellten Beispiel ist n = 3. Am Ausgang des Diversitäts-Kanalcodierers DCOD steht ein Übertragungssignal bereit, das aus n = 3 Antennendatensignalen A1(X), A2(X) und A3(X) jeweils gleicher Datenrate besteht. Insgesamt wird durch das Hinzufügen von Redundanz in dem Diversitäts-Kanalcodierer DCOD die Datenrate des Übertragungssignals (bestehend aus den drei Antennendatensignalen) im Vergleich zu der Datenrate des Nutzdatensignals X um den Faktor 3 erhöht. Die Antennendatensignale A1(X), A2(X) und A3(X) weisen eine durch das bei der Codierung eingesetzte Schema der Redundanzeinfügung fest vorgegebene Struktur auf. Nach einer Modulation in einem Modulator MOD werden sie über N = n = 3 Sendeantennen abgestrahlt.

Bei der Erfindung wird gemäß Fig. 2 das Nutzdatensignal X ebenfalls einer Codierung durch einen Kanalcodierer COD unterzogen. Der Kanalcodierer COD erzeugt ein codiertes Nutzdatensignal, das beispielsweise in Form von mehreren Datenströmen C1 (X), C2(X) und C3(X) oder multiplexiert als ein einziges Nutzdatensignal C(X), siehe Fig. 3, bereitgestellt wird. Die Datenrate des codierten Nutzdatensignals C1(X), C2(X) und C3(X) bzw. C(X) ist gegenüber dem eingangsseitig zugeführten Nutzdatensignal X um den Faktor der Coderate $R_C$ = k/n erhöht.

Erfindungsgemäß wird das codierte Nutzdatensignal einer Datenratenanpassungsstufe RM zugeführt. Die Datenratenanpassungsstufe konvertiert das codierte Nutzdatensignal (bzw. die einzelnen codierten Datenströme C1(X), C2(X) und C3(X)) in ein Übertragungssignal, welches zur Abstrahlung über eine vorgegebene Anzahl N von Sendeantennen (in Fig. 2 sind N = 2 Antennen dargestellt) geeignet ist. Die Anzahl N ist beliebig vorgebbar. Die Datenratenanpassung erfolgt mit der Anpassungsrate $R_A$ = n/N, wobei n die Anzahl der in RM einlaufenden Datensymbole und N die Anzahl der von RM daraufhin ausgegebenen Datensymbole ist.

Das von der Datenratenanpassungsstufe RM ausgegebene Übertragungssignal, das wie in Fig. 2 dargestellt entweder bereits aus N Antennendatensignalen A1(X), .., AN(X) besteht oder in einem späteren Multiplexier- oder Demultiplexierschritt in die richtige Anzahl von Antennendatensignalen aufgeteilt wird, wird in einem Spreizcodierer SC einer Spreizcodierung unterzogen, in einem Modulator MOD in geeigneter Weise auf einen Träger moduliert und über die N Sendeantennen abgestrahlt. Bei der Spreizcodierung kann es sich beispielsweise um DS-CDMA (Direct Sequencing-Code Division Multiple Access) handeln, bei welchem jedem Datensymbol ein Schlüssel in Form eines Teilnehmerspezifischen Codes aufgeprägt wird.

Die erfindungsgemäße Datenratenanpassung des codierten Nutzdatensignals an die konstruktiv vorgegebenen Erfordernisse (N Sendeantennen im Sender) ermöglicht die Ausnutzung senderseitiger Antennendiversität für die Übertragung unterschiedlicher Dienste. Unterschiedliche Dienste werden üblicherweise mit unterschiedlichen Coderaten $R_C$ übertragen, um eine möglichst "sparsame" Codierung zu realisieren, die den dienstspezifischen Anforderungen an die Bit-Fehler-Rate im Empfänger gerade noch gerecht wird. Durch Einstellung einer bezüglich der vorgegebenen Antennenanzahl N an die Coderate $R_C$ angepaßten Datenrate des Übertragungssignals können beliebige Dienste über die feste Anzahl von N Sendeantennen unter Ausnutzung senderseitiger Antennendiversität abgestrahlt werden.

Im Gegensatz dazu müßte im Stand der Technik (Fig. 1) für jeden zu übertragenden Dienst ein eigener Diversitäts-Kanalcode zur Verfügung gestellt und zudem die Anzahl der Sendeantennen entsprechend der Coderate des jeweiligen Diversitäts-Kanalcodes eingestellt werden. Beides würde in der Praxis erhebliche Schwierigkeiten bereiten.

Vorzugsweise wird für die erfindungsgemäße Kanalcodierung ein Turbo-Codierer eingesetzt. Ein möglicher Aufbau eines Turbo-Codierers TCOD ist in Fig. 3 in Form eines Blockschaltbilds dargestellt.

Der Turbo-Codierer TCOD weist zwei identische, binäre, rekursive, systematische Faltungscodierer RSC1 und RSC2 auf, die in der Codiertechnik als RSC-(Recursive Systematic Convolutional-)Codierer bekannt sind. Dem ersten RSC-Faltungscodierer RSC1 ist eingangsseitig ein Turbo-Code-Verschachteler IL vorgeschaltet, der eine blockweise Verschachtelung des Nutzdatensignals X vornimmt. An die Ausgänge der beiden Faltungscodierer RSC1 und RSC2 sind jeweils optionale Punktierer PKT1 bzw. PKT2 angeschlossen. Die drei codierten Datenströme C1(X), C2(X) und C3(X) des in Fig. 2 dargestellten Codierers COD werden im Fall von TCOD durch die beiden Ausgänge der Punktierer PKT1, PKT2 und durch das Nutzdatensignal X realisiert.

An ihren Ausgängen stellen der erste Faltungscodierer RSC1 eine erste, verschachtelte Redundanz-Datenfolge $Y1 = (y1_1, y1_2, ..)$ und der zweite Faltungscodierer RSC2 eine zweite Redundanz-Datenfolge $Y2 = (y2_1, y2_2, ..)$ bereit. Pro Nutzdatensymbol $x_i$ wird in jedem Faltungskodierer ein Redundanz-Datensymbol $y1_i$ bzw. $y2_i$ erzeugt. Dabei bezeichnet i den betrachteten Zeitschritt, d.h. i = 1, 2,...

Eine erste Möglichkeit der Durchführung der Turbo-Codierung besteht darin, daß die in Fig. 3 eingezeichneten Punktierer PKT1 und PKT2 entfallen. In diesem Fall gilt C1(X) = Y1, C2(X) = Y2 und C3(X) = X. Die Coderate von TCOD beträgt $R_C = 1/3$.

Das codierte Nutzdatensignal muß nicht in Form von drei Einzelsignalen C1(X), C2(X) und C3(X) von dem Turbo-Codierer TCOD ausgegeben werden, sondern kann wie bereits erwähnt durch Multiplexieren dieser Datensignale in ein einzelnes codiertes Nutzdatensignal C(X) umgesetzt werden. Die Multiplexierung mittels des in Fig. 3 dargestellten Multiplexers MUX kann beispielsweise nach der Vorschrift

$$C = (x_1, y2_1, y1_1, x_2, y2_2, y1_2, x_3, y2_3, y1_3, ..)$$

durchgeführt werden.

Die Punktierer PKT1, PKT2 dienen zur variablen Einstellung der Coderate des Turbo-Codierers TCOD. Soll der Turbo-Codierer TCOD eine Coderate von $R_C = 1/2$ aufweisen, werden die beiden Redundanz-Teilfolgen Y1 und Y2 beispielsweise alternierend punktiert und vorab im Multiplexer MUX multiplexiert. Die sich dabei ergebende Redundanz-Datenfolge $Y = (y1_1, y2_2, y1_3, y2_4, ..)$ wird nachfolgend - ebenfalls noch im Multiplexer MUX - alternierend mit der systematischen Datenfolge X multiplexiert. Das sich bei dieser (speziellen) Form der Turbocodierung ergebende fehlerschutzcodierte Nutzdatensignal weist demzufolge die Form $C(X) = (x_1, y1_1, x_2, y2_2, x_3, y1_3, x_4, y2_4, ..)$ auf.

Sofern der Codierer COD eine variable Coderate $R_C$ aufweist, (was in dem in Fig. 3 dargestellten Beispiel wie erläutert durch Zuschaltung bzw. Überbrückung der Punktierer PKT1, PKT2 erreicht werden kann), wird der Datenratenanpassungsstufe RM die aktuelle Coderate $R_C$ mitgeteilt, damit eine entsprechende Anpassung der Datenrate zur Erzeugung eines für die feste Anzahl N geeigneten Übertragungssignals vorgenommen werden kann.

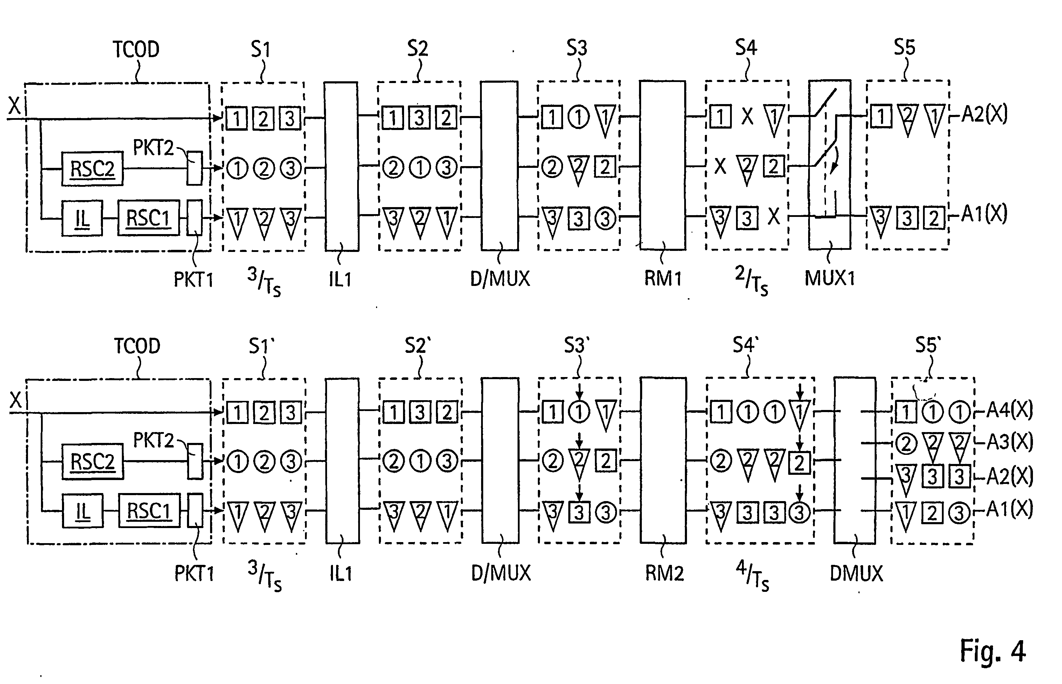

Neben der Datenratenanpassung können im Signalweg zwischen dem Kanalcodierer COD und dem Modulator MOD eine Verschachtelung des codierten Nutzdatensignals und/oder eine Multiplexierung/Demultiplexierung zur Verteilung der Datensymbole auf die N Antennensignale A1(X), .., AN(X) vorgenommen werden. In Fig. 4 sind für zwei Beispiele, nämlich N = 2 und N = 4, geeignete Schemata für die Verschachtelung, die Demultiplexierung/Multiplexierung und die Ratenanpassung des codierten Nutzdatensignals angegeben.

Beiden Beispielen liegt der in Fig. 3 gezeigte Turbo-Codierer TCOD mit einer Coderate $R_C = 1/3$ zugrunde. Die beiden Punktierer PKT1 und PKT2 sind also deaktiviert.

Die im Signalweg hinter dem Turbo-Codierer TCOD durchgeführten Signalbearbeitungsschritte werden in Fig. 4 mittels Schaubildern S1 bis S5 (für N = 2) und S1' bis S5' für (N = 4) erläutert. Im Schaubild S1 sind jeweils drei zeitlich aufeinanderfolgende Datensymbole der Ausgänge C1(X), C2(X) und C3(X) des Turbo-Codierers TCOD graphisch dargestellt. Zur Unterscheidung von Datensymbolen unterschiedlicher Ausgänge werden Quadrate bzw. Kreise bzw. Dreiecke verwendet. Die Nummern in diesen graphischen Elementen bezeichnen die Zeitschritte i = 1, 2, 3. Die Datenrate am Ausgang des Turbo-Codierers TCOD beträgt $3/T_S$, wobei $T_S$ die Symbolzeitdauer bezeichnet.

Im Signalweg hinter dem Turbo-Codierer TCOD befindet sich ein Verschachteler IL1. Der Verschachteler IL1 führt für jeden erhaltenen Datenstrom eine Permutierung der Datensymbole durch. Dadurch wird einerseits eine zeitliche Beabstandung ehemals benachbarter Datensymbole erreicht. Andererseits läßt sich durch eine geeignete Wahl der bezüglich C1(X), C2(X) und C3(X) unterschiedlichen Permutationsvorschriften auch erreichen, daß in jedem Zeitschritt nunmehr aus unterschiedlichen Zeitschritten stammende Datensymbole in den drei Datenströmen auftreten, siehe Schaubild S2.

Nachfolgend werden die Datensymbole der drei Datenströme untereinander verteilt. Dieser Datenbearbeitungsschritt kann mittels einer Demultiplexer-Multiplexer-Kombinationseinrichtung D/MUX durchgeführt werden. Hinter der Demultiplexer-Multiplexer-Kombinationseinrichtung D/MUX sind in jedem Datenstrom die zu einem bestimmten Zeitschritt an den Ausgängen des Turbo-Codierers TCOD auftretenden Datensymbole aufgereiht, siehe Schaubild S3.

Eine erste Datenratenanpassungsstufe RM1 arbeitet als Punktierer. Zu jedem Zeitschritt wird genau ein Datensymbol aus den drei parallelen Datenströmen punktiert, wobei die Punktierung bezüglich der Datenströme zyklisch erfolgt. Demnach wird in jedem Datenstrom ein Datensymbol aus drei Datensymbolen punktiert. Das punktierte Datensymbol wird verworfen und ist in dem Schaubild S4 durch ein Kreuz dargestellt. Am Ausgang der ersten Datenratenanpassungsstufe RM1 beträgt die Datenrate $2/T_S$.

Im Signalweg hinter der ersten Datenratenanpassungsstufe RM1 befindet sich ein Multiplexer MUX1, der für die Bereitstellung der richtigen Anzahl von Antennendatensignalen sorgt. Im vorliegenden Beispiel umfaßt das Übertragungssignal zwei Antennendatensignale A1(X) und A2(X). Die Erzeugung der beiden Antennendatensignale A1(X) und A2(X) erfolgt in der Weise, daß der Multiplexer MUX1 die an seinem mittleren Eingang eingegebenen Datensymbole wechselweise auf das erste Antennendatensignal A1(X) und das zweite Antennendatensignal A2(X) verteilt, siehe Schaubild S5.

In dem zweiten Beispiel (unterer Teil von Fig. 4) wird der Fall N = 4 betrachtet. Die Funktionsweise des Turbo-Codierers TCOD, des Verschachtelers IL1 und der Demultiplexer-Multiplexer-Kombinationseinrichtung D/MUX ist identisch mit der Funktionsweise der entsprechenden Komponenten im ersten Beispiel. Mithin sind die in den Schaubildern S1 und S1' bzw. S2 und S2' bzw. S3 und S3' dargestellten Datenströme identisch.

Eine zweite Datenratenanpassungsstufe RM2 führt eine Erhöhung der Datenrate durch. Die Erhöhung der Datenrate wird durch eine Wiederholungscodierung ("repetitive coding") erreicht. Dabei werden in jedem Datenstrom jeweils das in einem bestimmten, für alle Datenströme identischen Zeitschritt auftretende Datensymbol wiederholt. Die zu replizierenden Datensymbole sind in dem Schaubild S3' mit einem Pfeil gekennzeichnet. Das Ergebnis der Wiederholungscodierung der einzelnen Datenströme ist in dem Schaubild S4' dargestellt. Die Datenrate am Ausgang der zweiten Datenratenanpassungsstufe RM2 beträgt $4/T_S$.

Im Signalweg hinter der zweiten Datenratenanpassungsstufe RM2 ist ein Demultiplexer DMUX angeordnet. Der Demultiplexer DMUX nimmt die Datensignale der drei von der Datenratenanpassungsstufe RM2 ausgegebenen Datenströme entgegen und stellt an seinem Ausgang vier Antennendatensignale A1(X), A2(X), A3(X) und A4(X) zur Verfügung. Dabei ist das erste Antennendatensignal A1(X) aus den zu einem bestimmten, für alle Datenströme identischen Zeitschritt in den Eingangsdatenströmen des Demultiplexers DMUX vorhandenen Datensymbolen gebildet. Die entsprechenden Datensymbole sind in dem Schaubild S4' mit einem Pfeil gekennzeichnet. Die Antennendatensignale A2(X) bis A4(X) werden demgegenüber aus jeweils drei zeitlich benachbart auftretenden Datensymbolen der drei Eingangsdatenströme gebildet. Wie aus dem Schaubild S5' ersichtlicht folgt A2(X) aus dem in Fig. 4 zuunterst eingezeichneten Datenstrom, A3(X) ergibt sich aus dem mittleren Datenstrom und A4(X) wird aus dem zuoberst dargestellten Datenstrom gebildet.

Die weitere Signalverarbeitung der zwei bzw. vier Antennendatensignale der Fig. 4 erfolgt in Analogie zu Fig. 2, d.h. die Antennendatensignale werden spreizcodiert, auf einen Träger moduliert und über zwei Antennen (erstes Beispiel) bzw. vier Antennen (zweites Beispiel) abgestrahlt.

Für den Empfang der abgestrahlten Datensignale können in dem Empfänger sowohl eine als auch mehrere Sendeantennen eingesetzt werden. Zur Decodierung können MAP-(Maximum A-Posteriori-)Decodierer oder auch SOVA-(Soft Output Viterbi Algorithm) Decodierer eingesetzt werden.

**Patentansprüche**

1. Verfahren zur Erzeugung eines Übertragungssignals, das mehrere für die Abstrahlung über jeweils eine Sendeantenne vorgesehene Antennendatensignale (A1(X), .., AN(X)) umfaßt, aus einem Nutzdatensignal (X), bei welchem das Nutzdatensignal (X) einer Kanalcodierung mit variabler Coderate ($R_C$) unterzogen wird, die Anzahl der Sendeantennen fest ist und im Signalweg zwischen der Kanalcodierung und der Abstrahlung der Antennendatensignale (A1(X), .., AN(X)) über die Sendeantennen eine Datenratenanpassung mit einem durch den Quotienten aus Eingangsrate zu Ausgangsrate definierten variablen Ratenanpassungsverhältnis vorgenommen wird, mit den Schritten:

- Einstellen einer Coderate ($R_C$) für die Kanalcodierung; und
- Durchführen der Datenratenanpassung, wobei das Ratenanpassungsverhältnis ($R_A$) abhängig von der eingestellten Coderate ($R_C$) ist.

2. Verfahren zur Erzeugung eines Übertragungssignals, das mehrere für die Abstrahlung über jeweils eine Sendeantenne vorgesehene Antennendatensignale (A1(X), .., AN(X)) umfaßt, aus einem Nutzdatensignal (X), bei welchem das Nutzdatensignal (X) einer Kanalcodierung mit fester Coderate ($R_C$) unterzogen wird, eine variabel vorgebbare Anzahl N von Sendeantennen vorgesehen ist, und im Signalweg zwischen der Kanalcodierung und der Abstrahlung der Antennendatensignale (A1(X), .., AN(X)) über die Sendeantennen eine Datenratenanpassung mit einem durch den Quotienten aus Eingangsrate zu Ausgangsrate definierten variablen Ratenanpassungsverhältnis vorgenommen wird, mit den Schritten:

- Wählen der Anzahl N von Sendeantennen; und
- Durchführen der Datenratenanpassung, wobei das Ratenanpassungsverhältnis ($R_A$) abhängig von der Anzahl N der gewählten Sendeantennen ist.

3. Verfahren nach Anspruch 1 oder 2, **dadurch gekennzeichnet,**

- **daß** die Datenratenanpassung eine Punktierung und/oder Wiederholung von Datensymbolen des codierten Datensignals (C(X); C1(X), C2(X), C3(X)) umfaßt.

4. Verfahren nach einem der vorhergehenden Ansprüche, **dadurch gekennzeichnet,**

- **daß** im Signalweg zwischen der Kanalcodierung und der Abstrahlung der Antennendatensignale (A1(X), .., AN(X)) über die Sendeantennen eine Demultiplexierung des codierten Datensignals (C(X); C1(X), C2(X), C3(X)) erfolgt.

5. Verfahren nach einem der vorhergehenden Ansprüche, **dadurch gekennzeichnet,**

- **daß** im Signalweg zwischen der Kanalcodierung und der Abstrahlung über die Sendeantennen eine Verschachtelung des codierten Datensignals (C(X); C1(X), C2(X), C3(X)) erfolgt.

6. Verfahren nach einem der vorhergehenden Ansprüche, **dadurch gekennzeichnet,**

- **daß** zur Codierung des Nutzdatensignals (X) eine Turbo-Codierung eingesetzt wird.

7. Verfahren nach Anspruch 2, **dadurch gekennzeichnet,**

- **daß** zur Codierung des Nutzdatensignals (X) eine Turbo-Codierung eingesetzt wird,
- **daß** bei der Turbo-Codierung ein systematisches Datensignal (C3(X)), ein Redundanzdatensignal (C2(X)) und ein verschachteltes Redundanzdatensignal (C1(X)) erzeugt werden,
- **daß** aus diesen drei Datensignalen (C1(X), C2(x), C3(x)) durch Verteilung der Datensymbole untereinander drei Mischdatensignale mit unveränderter Datenrate erzeugt werden, und
- **daß**, sofern N < 3, durch eine Punktierung aller drei Mischdatensignale und anschließende Multiplexierung oder, sofern N > 3, durch eine Wiederholung von Datensymbolen der drei Mischdatensignale und anschließende Demultiplexierung die gewählte Anzahl von N Antennendatensignalen erzeugt wird.

8. Verfahren nach einem der vorhergehenden Ansprüche, **dadurch gekennzeichnet,**

- **daß** das Übertragungssignal einer CDMA-Spreizcodierung unterzogen wird.

9. Einrichtung zur Erzeugung eines Übertragungssignals, das mehrere für die Abstrahlung über jeweils eine Sendeantenne vorgesehenen Antennendatensignale (A1(X), .., AN(X)) umfaßt, aus einem Nutzdatensignal (X), mit

- einem das Nutzdatensignal entgegennehmenden Kanalcodierer (COD, TCOD) mit variabel einstellbarer Coderate ($R_C$),
- einer fest vorgegebenen Anzahl von Sendeantennen, und
- einer im Signalweg zwischen dem Kanalcodierer (COD, TCOD) und den Sendeantennen angeordneten Datenratenanpassungsstufe (RM; RM1, RM2), die ausgelegt ist, eine Datenratenanpassung mit einem durch den Quotienten aus Eingangsrate zu Ausgangsrate definierten Ratenanpassungsverhältnis vorzunehmen, wobei das Ratenanpassungsverhältnis abhängig von der eingestellten Coderate ($R_C$) ist.

10. Einrichtung nach Anspruch 9, **dadurch gekennzeichnet,**

- **daß** die Datenratenanpassungsstufe (RM; RM1, RM2) einen Punktierer und/oder einen Wiederholer von Datensymbolen des codierten Datensignals (C(X); C1(X), C2(X), C3(X)) umfaßt.

11. Einrichtung nach Anspruch 9 oder 10, **dadurch gekennzeichnet,**

    - **daß** im Signalweg zwischen der Datenratenanpassungsstufe (RM; RM1, RM2) und den Sendeantennen ein Multiplexer (MUX1) und/oder ein Demultiplexer (DMUX) enthalten ist.

12. Einrichtung nach einem der Ansprüche 9 bis 11, **dadurch gekennzeichnet,**

    - **daß** der Kanalcodierer ein Turbo-Codierer (TCOD) ist.

13. Einrichtung nach einem der Ansprüche 9 bis 12, **gekennzeichnet durch**

    - einen CDMA-Spreizcodierer (SC), der das Übertragungssignal einer CDMA-Spreizcodierung unterzieht.


**Claims**

1. Method for generating a transmit signal which comprises a number of antenna data signals (A1(X), .., AN(X)) provided for emission via in each case one transmitting antenna, from a useful data signal (X), in which the useful data signal (X) is subjected to channel coding with variable code rate ($R_C$), the number of transmitting antennas is fixed and data rate matching is performed with a variable rate matching ratio defined by the quotient of input rate to output rate on the signal path between the channel coding and the emission of the antenna data signals (A1(X), .., AN(X)) via the transmitting antennas, comprising the following steps:

    - setting a code rate ($R_C$) for the channel coding; and
    - performing the data rate matching, the rate matching ratio ($R_A$) being dependent on the code rate ($R_C$) set.

2. Method for generating a transmit signal which comprises a number of antenna data signals (A1(X), .., AN(X)) provided for emission via in each case one transmitting antenna, from a useful data signal (X), in which the useful data signal (X) is subjected to channel coding with a fixed code rate ($R_C$), a variably predeterminable number N of transmitting antennas is provided and data rate matching is performed with a variable rate matching ratio defined by the quotient of input rate to output rate on the signal path between the channel coding and the emission of the antenna data signals (A1(X), .., AN(X)) via the transmitting antennas, comprising the following steps:

    - selecting the number N of transmitting antennas; and
    - performing the data rate matching, the rate matching ratio ($R_A$) being dependent on the number (N) of selected transmitting antennas.

3. Method according to Claim 1 or 2, **characterized**

    - **in that** the data rate matching comprises puncturing and/or repeating data symbols of the coded data signal (C(X); C1(X), C2(X), C3(X)).

4. Method according to one of the preceding claims, **characterized**

    - **in that** the coded data signal (C(X); C1(X), C2(X), C3(X)) is demultiplexed in the signal path between the channel coding and the emission of the antenna data signals (A1(X), .., AN(X)) via the transmitting antennas.

5. Method according to one of the preceding claims, **characterized**

    - **in that** the coded data signal (C(X); C1(X), C2(X), C3(X)) is interleaved in the signal path between the channel coding and the emission via the transmitting antennas.

6. Method according to one of the preceding claims, **characterized**

    - **in that** turbo coding is used for coding the useful data signal (X).

7. Method according to Claim 2, **characterized**

    - **in that** turbo coding is used for coding the useful data signal (X),
    - **in that** during the turbo coding, a systematic data signal (C3(X)), a redundant data signal (C2(X)) and an interleaved redundant data signal (C1(X)) are generated,
    - **in that** three mixed data signals with unchanged data rate are generated from these three data signals (C1(X), C2(X), C3(X)) by distributing the data symbols among each other, and
    - **in that** the predetermined number of N antenna data signals is generated by puncturing all three mixed data signals and subsequent multiplexing if N < 3, or by repeating data symbols of the three mixed data signals and subsequent demultiplexing if N > 3.

**8.** Method according to one of the preceding claims, **characterized in that**

- the transmit signal is subjected to CDMA spread-spectrum coding.

**9.** Device for generating a transmit signal, which comprises a number of antenna data signals (A1(X), .., AN(X)), provided for emission via in each case one transmitting antenna, from a useful data signal (X), comprising

- a channel coder (COD, TCOD) with variably adjustable code rate ($R_C$) which receives the useful data signal,
- a fixed predetermined number of transmitting antennas, and
- a data rate matching stage (RM; RM1, RM2), arranged on the signal path between the channel coder (COD/TCOD) and the transmitting antennas, which is designed for performing data rate matching with a rate matching ratio defined by the quotient of input rate to output rate, the rate matching ratio being dependent on the code rate ($R_C$) set.

**10.** Device according to Claim 9, **characterized**

- **in that** the data rate matching stage (RM; RM1, RM2) comprises a puncturing device and/or a device for repeating data symbols of the coded data signal (C(X); C1(X), C2(X), C3(X)).

**11.** Device according to Claim 9 or 10, **characterized**

- **in that** a multiplexer (MUX1) and/or a demultiplexer (DMUX) is contained in the signal path between the data rate matching stage (RM; RM1, RM2) and the transmitting antennas.

**12.** Device according to one of Claims 9 to 11, **characterized in that**

- the channel coder is a turbo coder (TCOD).

**13.** The method according to one of Claims 9 to 12, **characterized**

- **by** a CDMA spread-spectrum coder (SC) which subjects the transmit signal to CDMA spread-spectrum coding.

**Revendications**

**1.** Procédé de production d'un signal de transmission, qui comprend plusieurs signaux de données d'antennes (A1 (X), ..., AN (X)) prévus pour être émis chacun par l'intermédiaire d'une antenne, à partir d'un signal de données utiles (X), dans lequel on soumet le signal de données utiles (X) à un codage de canal avec facteur de code variable ($R_C$), le nombre des antennes d'émission est fixe et on effectue dans le trajet des signaux entre le codage de canal et l'émission des signaux de données d'antennes (A1 (X), ..., AN (X)) par l'intermédiaire des antennes d'émission une adaptation de débit de données avec un rapport d'adaptation de débit variable défini par le quotient du débit d'entrée et du débit de sortie, avec les étapes suivantes :

- réglage d'un facteur de code ($R_C$) pour le codage de canal ; et
- réalisation de l'adaptation de débit de données, le rapport d'adaptation de débit ($R_A$) étant dépendant du facteur de code ($R_C$) réglé.

**2.** Procédé de production d'un signal de transmission, qui comprend plusieurs signaux de données d'antennes (A1 (X), ..., AN (X)) prévus pour être émis chacun par l'intermédiaire d'une antenne, à partir d'un signal de données utiles (X), dans lequel on soumet le signal de données utiles (X) à un codage de canal avec facteur de code fixe ($R_C$), un nombre variable et pouvant être prescrit N d'antennes d'émission est prévu et on effectue dans le trajet des signaux entre le codage de canal et l'émission des signaux de données d'antennes (A1 (X), ..., AN (X)) par l'intermédiaire des antennes d'émission une adaptation de débit de données avec un rapport d'adaptation de débit variable défini par le quotient du débit d'entrée et du débit de sortie, avec les étapes suivantes :

- choix du nombre N d'antennes d'émission ; et
- réalisation de l'adaptation de débit de données, le rapport d'adaptation de débit ($R_A$) étant dépendant du nombre N des antennes d'émission choisies.

**3.** Procédé selon la revendication 1 ou 2, **caractérisé par le fait que**

- l'adaptation de débit de données comprend un ponctionnement et/ou une répétition de symboles de données du signal de données codé (C (X) ; C1 (X), C2 (X), C3 (X)).

**4.** Procédé selon l'une des revendications précédentes, **caractérisé par le fait que**,

- dans le trajet des signaux entre le codage de canal et l'émission des signaux de données d'antennes (A1 (X), ..., AN (X)) par l'intermédiaire des antennes d'émission, on effectue un démultiplexage du signal de données codé (C (X) ; C1 (X), C2 (X), C3 (X)).

5.  Procédé selon l'une des revendications précédentes,
    **caractérisé par le fait que**,

    - dans le trajet des signaux entre le codage de canal et l'émission par l'intermédiaire des antennes d'émission, on effectue une imbrication du signal de données codé (C (X) ; C1 (X), C2 (X), C3 (X)).

6.  Procédé selon l'une des revendications précédentes,
    **caractérisé par le fait que**,

    - pour le codage du signal de données utiles (X), on utilise un turbo-codage.

7.  Procédé selon la revendication 2,
    **caractérisé par le fait que**,

    - pour le codage du signal de données utiles (X), on utilise un turbo-codage,
    - lors du turbo-codage, on produit un signal de données systématique (C3 (X)), un signal de données redondant (C2 (X)) et un signal de données redondant imbriqué (C1 (X)),
    - à partir de ces trois signaux de données (C1 (X), C2 (X), C3 (X)), on produit par répartition des symboles de données entre eux trois signaux de données mixtes avec débit de données inchangé, et
    - on produit le nombre choisi de N signaux de données d'antennes, à savoir si N < 3, par un ponctionnement des trois signaux de données mixtes puis par un multiplexage ou, si N > 3, par une répétition de symboles de données des trois signaux de données mixtes puis par un démultiplexage.

8.  Procédé selon l'une des revendications précédentes,
    **caractérisé par le fait que**

    - on soumet le signal de transmission à un codage par étalement CDMA.

9.  Dispositif de production d'un signal de transmission, qui comprend plusieurs signaux de données d'antennes (A1 (X), ..., AN (X)) prévus pour être émis chacun par l'intermédiaire d'une antenne, à partir d'un signal de données utiles (X), comportant :

    - un codeur de canal (COD, TCOD) avec facteur de code variable réglable ($R_C$) et recevant le signal de données utiles,
    - un nombre fixe prédéterminé d'antennes d'émission, et
    - un étage d'adaptation de débit de données (RM ; RM1, RM2) qui est placé dans le trajet des signaux entre le codeur de canal (COD, TCOD) et les antennes d'émission et qui est conçu pour effectuer une adaptation de débit de données avec un rapport d'adaptation de débit défini par le quotient du débit d'entrée et du débit de sortie, le rapport d'adaptation de débit étant dépendant du facteur de code ($R_C$) réglé.

10. Dispositif selon la revendication 9,
    **caractérisé par le fait que**

    - l'étage d'adaptation de débit de données (RM ; RM1, RM2) comprend un ponctionneur et/ou un répéteur de symboles de données du signal de données codé (C (X) ; C1 (X), C2 (X), C3 (X)).

11. Dispositif selon la revendication 9 ou 10,
    **caractérisé par le fait que**,

    - dans le trajet des signaux entre l'étage d'adaptation de débit de données (RM ; RM1, RM2) et les antennes d'émission, il y a un multiplexeur (MUX1) et/ou un démultiplexeur (DMUX).

12. Dispositif selon l'une des revendications 9 à 11,
    **caractérisé par le fait que**

    - le codeur de canal est un turbo-codeur (TCOD).

13. Dispositif selon l'une des revendications 9 à 12,
    **caractérisé par**

    - un codeur par étalement CDMA (SC) qui soumet le signal de transmission à un codage par étalement CDMA.

$R_c = {}^1/_n$    A3(X)    N = n

X →

A2(X)

DCOD    A1(X)    MOD

**Fig. 1**

$R_c = {}^k/_n$    $R_A = {}^n/_N$    AN(X)    SC

X →

C3(X)

C2(X)

N

COD    C1(X)    RM    A1(X)    MOD

**Fig. 2**

TCOD    C3(X) = X

X

RSC2    PKT2

MUX    C(X)

IL    Y2    C2(X)

RSC1    PKT1

Y1    C1(X)

**Fig. 3**

Fig. 4

11